Europäisches Patentamt

European Patent Office

Office européen des brevets

(11) Numéro de publication: **0 437 119 A2**

## (12) DEMANDE DE BREVET EUROPEEN

(21) Numéro de dépôt: 90402239.9

(51) Int. Cl.⁵: **B65D 83/00, B65D 47/26**

(22) Date de dépôt: 03.08.90

(30) Priorité: **11.01.90 FR 9000292**

(43) Date de publication de la demande:
**17.07.91 Bulletin 91/29**

(84) Etats contractants désignés:
**AT BE CH DE DK ES FR GB GR IT LI LU NL SE**

(71) Demandeur: **Laffy, Raoul**
**8 Villa des Peupliers**
**F-92200 Neuilly sur Seine(FR)**

Demandeur: **Laffy, Pierre Alain**
**215 Rue Henri Ravera**
**F-92220 Bagneux(FR)**

(72) Inventeur: **Laffy, Raoul**
**8 Villa des Peupliers**
**F-92200 Neuilly sur Seine(FR)**
Inventeur: **Laffy, Pierre Alain**
**215 Rue Henri Ravera**
**F-92220 Bagneux(FR)**

(74) Mandataire: **Bruder, Michel et al**
**Cabinet Michel Bruder Conseil en Brevets**
**10, rue de la Pépinière**
**F-75008 Paris(FR)**

(54) **Récipient ou flacon aseptique conservateur d'un produit non pateux.**

(57) La présente concerne un récipient ou flacon aseptique (1) conservateur d'un produit non pâteux, comporte un corps à paroi latérale cylindrique ou prismatique, obturé, à une extrémité, par un fond (3) et présentant un orifice (7) de sortie du produit, et un piston mobile interne (4) frottant d'une manière étanche contre la surface interne de la paroi latérale du récipient (1) et délimitant un volume contenant le produit (2). Pour empêcher les germes et bactéries présents dans l'air environnant de pénétrer à l'intérieur du produit et de le contaminer, des moyens sont prévus pour exercer sur le piston (4), lors de chaque utilisation, une force suffisante pour repousser le piston (4) en direction de l'orifice de sortie (7) et par conséquent pour exercer sur le produit (2) une pression assurant la sortie de la quantité de produit désirée, et des moyens anti-retour maintiennent le piston, après cessation de la force exercée en vue de la sortie du produit, dans la position atteinte de manière à conserver en permanence une pression résiduelle dans le produit.

FIG. 1

La présente invention concerne un récipient ou flacon aseptique conservateur d'un produit non pâteux, c'est-à-dire liquide, semi-liquide, pulvérulent, granuleux c'est-à-dire capable de s'écouler sous l'effet de son propre poids.

Dans de nombreux domaines on utilise des récipients, tels que bouteilles, flacons, pots, boîtes, canettes etc... contenant des produits liquides, semi-liquides, pulvérulents, granuleux qui peuvent être utilisés dans le domaine de la santé comme médicaments, sérums physiologiques, agents de désinfection ou de prévention contre l'infection etc..., dans le domaine cosmétologique tel que crèmes de beauté etc..., dans le domaine alimentaire comme boissons diverses, vins, jus de fruits, sirops, sauces diverses, confitures..., dans d'autres domaines comme vernis, peintures... Ces récipients comportent généralement un orifice de sortie qui est obturé par un obturateur mobile, (couvercle, bouchon, capsule etc...). Lors de l'utilisation d'un tel produit contenu dans le récipient, une fois l'obturateur enlevé, le produit s'écoule de lui-même à travers l'orifice de sortie, et de l'air pénètre alors à l'intérieur du récipient pour remplir l'espace laissé libre par la quantité de liquide utilisée. Il en résulte que l'oxygène et les germes, bactéries, microbes etc..., présents normalement dans l'air, se trouvent introduits dans le récipient et que ces germes provoquent, au bout d'un certain temps, une altération (pollution, fermentation, oxydation) du produit contenu dans le récipient, ou bien simplement l'air dessèche le produit ou enlève son arôme si bien que ce produit devient plus ou moins rapidement impropre à l'usage. Pour éviter cette pollution on utilise des conservateurs parfois nocifs, comme dans le cas des produits ophtalmologiques, ou des conservateurs et des antioxydants comme dans le cas par exemple des produits cosmétologiques.

La présente invention vise à remédier à cet inconvénient en procurant un récipient de structure particulièrement simple, empêchant, lors de l'utilisation, toute entrée d'air à l'intérieur et même éventuellement tout contact du produit avec l'air et garantissant une non altération du produit qu'il contient, sur une longue durée et sans l'emploi de conservateur ou d'antioxydant comme c'est le cas général.

A cet effet, ce récipient ou flacon aseptique conservateur d'un produit non pâteux, c'est-à-dire liquide, semi-liquide, pulvérulent ou granuleux, comportant un corps à paroi latérale cylindrique ou prismatique, obturé, à une extrémité, par un fond et présentant un orifice de sortie du produit, est caractérisé en ce qu'il comprend un piston mobile interne frottant d'une manière étanche contre la surface interne de la paroi latérale du récipient et délimitant un volume contenant le produit, des moyens pour exercer sur le piston, lors de chaque utilisation, une force suffisante pour repousser le piston en direction de l'orifice de sortie et par conséquent pour exercer sur le produit une pression assurant la sortie de la quantité de produit désirée, et des moyens anti-retour pour maintenir le piston, après cessation de la force exercée en vue de la sortie du produit, dans la position atteinte de manière à conserver en permanence une pression résiduelle dans le produit suffisante pour empêcher les germes et bactéries présents dans l'air environnant de pénétrer à l'intérieur du produit et de le contaminer.

Lorsqu'on supprime la force exercée sur le piston, le produit cesse automatiquement de s'écouler à l'extérieur du fait de l'étanchéité du piston, retenu en place, et que l'interface piston-produit n'est pas mise à la pression atmosphérique, condition indispensable pour que le produit puisse sortir du récipient sans force exercée sur le piston. Pour faire sortir le produit dans ces conditions il faudrait créer un vide à l'endroit de l'interface piston-produit, ce qui nécessiterait une force de traction importante.

Des expérimentations réalisées par l'Institut Pasteur, développées plus loin, prouvent que les bactéries et germes ne pénètrent pas dans le produit retenu à l'intérieur du récipient et que ce produit conserve sa stérilité pendant une durée illimitée. Néanmoins on peut utiliser de surcroît un obturateur manuel ou automatique conçu de telle façon que, lors de chaque utilisation, il coupe le produit sortant par l'orifice avant la dernière goutte de sorte que le produit restant dans le récipient n'a jamais été en contact avec de l'air même au cours de l'utilisation, renforçant ainsi la stérilité de versement.

Le récipient aseptique suivant l'invention offre ainsi l'avantage que le produit contenu ne peut être pollué, altéré, sujet à oxydation ou fermentation, desséché ou perdre son arôme, ce qui autorise une très longue conservation du produit.

On décrira ci-après, à titre d'exemples non limitatifs, diverses formes d'exécution de la présente invention, en référence au dessin annexé sur lequel :

La figure 1 est une vue en coupe axiale et verticale d'un récipient aseptique suivant l'invention.

Les figures 2 à 7 sont des vues en coupe axiale et verticale de variantes d'exécution du récipient aseptique.

Les figures 8 et 9 sont des vues en coupe d'une forme d'exécution d'un dispositif obturateur du récipient, ce dispositif obturateur étant représenté respectivement en position d'ouverture et de fermeture.

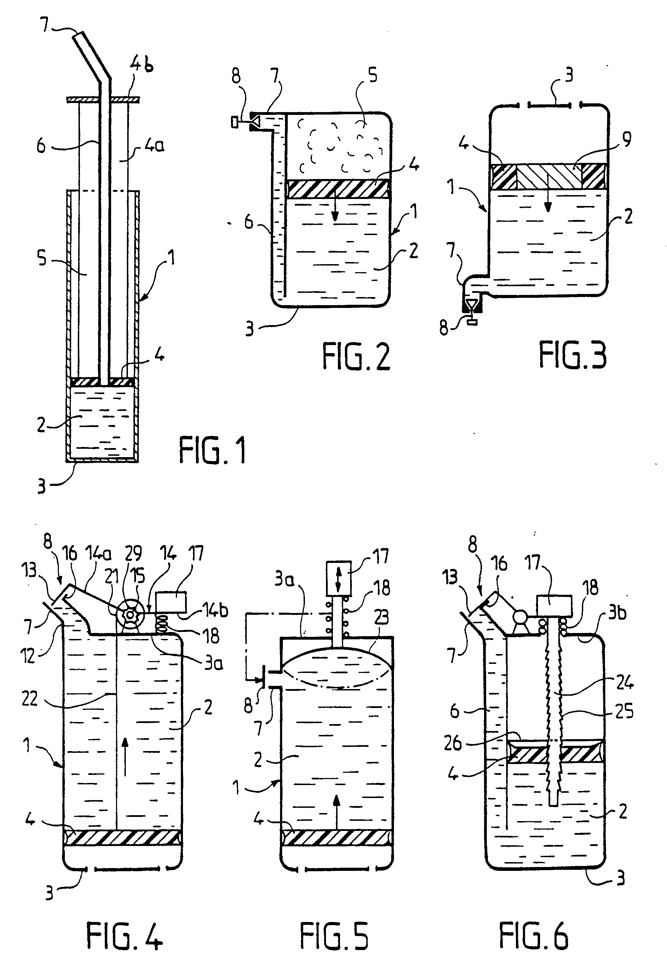

Sur la figure 1 est représenté un récipient aseptique 1 contenant un liquide 2 devant être protégé à l'encontre de toute contamination par les germes, bactéries etc... présents dans l'air ambiant. Le récipient 1 comprend un corps à paroi latérale de forme cylindrique ou prismatique, et qui est fermé par un fond 3 à sa partie inférieure. Le récipient 1 contient un piston mobile interne 4 en matière élastique, frottant d'une manière étanche sur la surface interne de la paroi latérale du récipient et séparant le volume interne du récipient en deux parties à savoir une partie supérieure 5 mise à l'air libre et un volume inférieur dans lequel est stocké le liquide 2. Dans cette forme d'exécution le piston étanche 4 est solidaire d'une tige de piston 4a à section transversale en forme d'étoile à trois branches et s'étendant vers le haut et à l'extérieur du récipient 1, en passant à travers l'orifice supérieur de ce récipient qui est ouvert. La tige de piston 4a est solidaire, à son extrémité supérieure qui fait saillie à l'extérieur du corps du récipient 1, d'une tête élargie 4b servant de poussoir pour actionner le piston 4. Suivant une variante de réalisation la tête formant poussoir 4b pourrait se trouver, en position initiale c'est-à-dire le récipient étant totalement rempli du produit, légèrement à l'intérieur du corps du récipient. De ce fait la tête formant poussoir 4b ne pourrait être que repoussée progressivement à l'intérieur du récipient et non pas tirée vers l'extérieur. Un tube 6 prévu pour la sortie du liquide, s'étend axialement le long de la tige de piston 4a, il traverse, à son extrémité interne, le piston étanche 4 et débouche dans le volume inférieur contenant le liquide 2, et il constitue, à son extrémité supérieure, un orifice de sortie 7 qui, dans cette forme d'exécution, est laissé libre. Par ailleurs le récipient suivant l'invention est pourvu de moyens anti-retour qui sont soit liés au piston étanche 4 soit prévus sur une partie quelconque de la paroi du récipient 1.

Le tube de sortie vertical 6, qui peut tout aussi bien être excentré ou latéral extérieurement, sur le corps du récipient, peut être utilisé également dans n'importe laquelle des différentes formes d'exécution du récipient aseptique suivant l'invention et notamment celles qui sont décrites en détail par la suite.

Des essais ont été effectués par l'Institut Pasteur avec un récipient tel que représenté sur la figure 1 rempli avec un liquide 2 constitué par un milieu de culture thioglycolate (MCT) qui permet la croissance aussi bien des bactéries aérobies qu'anaérobies. On a contaminé artificiellement des eaux physiologiques (sensiblement identiques à des liquides organiques, larves, salives, exsudats) dans des béchers évasés avec des germes ci-après issus de culture sur gélose et dont on a dénombré les germes:
- Groupe a :

1) Escherichia coli, $10^3$/ml
2) Pseudomonas aeruginosa, $10^3$/ml
3) Salmonella typhimurium, $10^3$/ml
Ces trois germes sont mobiles et peuvent se propager par contact.
- Groupe b :
1) Staphylococcus aureus, $10^6$/ml
2) Streptococcus fecalis, $10^6$/ml responsable de suppurations.
- Groupe c :
ainsi que deux champignons :
1) Candida albicans
2) Aspergillus niger

ESSAI I

Chacun des germes des trois groupes a été utilisé individuellement.

Les gouttes de milieu de culture MCT du flacon ont été déposées 6 fois consécutivement à 1 heure d'intervalle, comme dans des conditions normales d'utilisation mais particulièrement sévères, au contact de la surface de l'eau physiologique contaminée. Le milieu de culture du flacon, les gouttes et l'eau physiologique contaminée sont donc en contact direct permettant ainsi de vérifier la conservation de la stérilité de versement lors de l'utilisation.

Le milieu intérieur est ensuite expulsé en totalité dans un tube stérile et placé 48 heures à l'étuve à 37° C.

ESSAI II

Les germes du groupe a 1 + 2 + 3, puis du groupe b 1 + 2, puis du groupe c 1 + 2, ont été mélangés et l'expérience a été refaite dans les même conditions mais aussi bien pour les mélanges a, b ou c, le liquide intérieur n'a pas été expulsé mais conservé 21 jours à l'étuve à 37° C.

RESULTAT :

ESSAI I
- Germes du groupe a :

1) = négatifs après 48 heures ; 2) idem ; 3) idem.
- Germes du groupe b :
1) négatifs après 48 heures ; 2) idem.
- Germes du groupe c :
1) négatifs après 5 jours ; 2) idem après 5 jours.
ESSAI II

Mélange du groupe a égal après 15 jours, aucun trouble dans le flacon distributeur. Le contenu est alors étalé sur des boîtes de gélose PTV.

Il n'y a eu aucune colonie après un séjour de 48 heures de ces plaques à l'étuve à 37°C.

Les résultats ont été identiques pour les mélanges b et c.

Les conclusions des essais ci-dessus, dans des conditions expérimentales voisines d'une utilisation normale, ont été que l'on obtient une bonne conservation stérile à l'intérieur du flacon conservateur de liquide d'un milieu de culture très sensible. Cette stérilité du contenu du flacon est totale et illimitée dans le temps et la stérilité de versement, lors de l'utilisation, est complètement garantie.

Dans la variante représentée sur la figure 2 le piston 4 délimite un volume supérieur 5 qui, dans ce cas, contient un gaz moteur sous pression. Le piston 4 est ainsi repoussé en permanence vers le bas sous l'effet de la pression du gaz comprimé dans le volume supérieur 5 lequel joue ainsi le rôle d'un dispositif anti-retour tout en maintenant en permanence une pression résiduelle sur le produit. Dans ce cas la sortie du liquide s'effectue par un tube plongeur latéral 6 (qui pourrait être éventuellement central ou excentré), qui est attenant à la paroi latérale du récipient 1 ou formé de moulage dans celle-ci. Le tube 6 débouche, à son extrémité inférieure, au voisinage du fond 3 du récipient, et son extrémité supérieure constitue un orifice de sortie 7 du récipient dans lequel peut être logé un obturateur 8 à commande manuelle ou automatique. Ce dispositif obturateur 8 est conçu de préférence, notamment pour des produits ophtalmologiques, de telle façon qu'il coupe le jet de liquide sortant du récipient avant la dernière goutte. De cette façon la totalité du liquide 2 restant dans le récipient n'est jamais en contact avec l'air, même à l'endroit de l'orifice de sortie 7, assurant ainsi une garantie supplémentaire de stérilité de versement.

Lorsqu'on veut utiliser une partie du liquide 2 contenu dans le flacon 1, on manoeuvre l'obturateur 8 de manière à ouvrir l'orifice de sortie 7. Sous l'effet de la pression du gaz régnant dans le volume supérieur 5, le liquide 2 est refoulé vers le haut à l'intérieur du tube 6 et il s'écoule sans pulvérisation à l'extérieur, à travers l'orifice de sortie 7. Lorsque la quantité de liquide désirée a été obtenue, l'obturateur 8 est refermé manuellement ou automatiquement et il interrompt l'écoulement du liquide vers l'extérieur, sans laisser aucun volume d'air prisonnier à l'extrémité supérieure du tube 6, c'est-à-dire juste endessous de l'obturateur 8. On protège donc ainsi parfaitement le liquide 2 à l'encontre de toute contamination par des germes présents dans l'air ambiant, ainsi que de toute oxydation, dessiccation ou perte d'arôme du liquide par l'air.

Le gaz sous pression peut remplir librement le volume supérieur 5 comme il est représenté sur la figure 2 ou être contenu dans une poche simple.

Toutefois, suivant une variante, ce gaz qui peut être de l'air, peut être introduit et monté en pression par une pompe à piston manuelle, soit directement dans le volume supérieur 5 soit dans une poche souple logée dans ce volume 5.

La figure 3 illustre une variante d'exécution du récipient aseptique représenté sur la figure 1 dans laquelle le piston mobile 4 est soumis, non pas à la pression d'un gaz comprimé, mais à la force d'une masse pesante 9 dont il est solidaire. Cette masse pesante 9 exerce, sur le piston mobile 4, une force verticale de haut en bas, force qui provoque un déplacement progressif vers le bas du piston 4 et une sortie régulière du courant de liquide à travers l'orifice de sortie 7 qui se trouve alors en position inférieure et qui maintient en permanence une pression résiduelle empêchant ainsi toute contamination du liquide. Pour permettre à la masse pesante 8 d'exercer la force verticale vers le bas sur le piston 9, le volume situé au-dessus de cette masse 13 doit être à la pression atmosphérique. Pour cela on peut soit supprimer le fond 3 du flacon, soit percer des trous dans ce fond pour assurer la mise à l'air libre.

De préférence la masse pesante 8 est intégrée au piston 9 qui ne présente alors une partie élastique qu'à sa périphérie, en formant ainsi un anneau élastique de retenue par frottement.

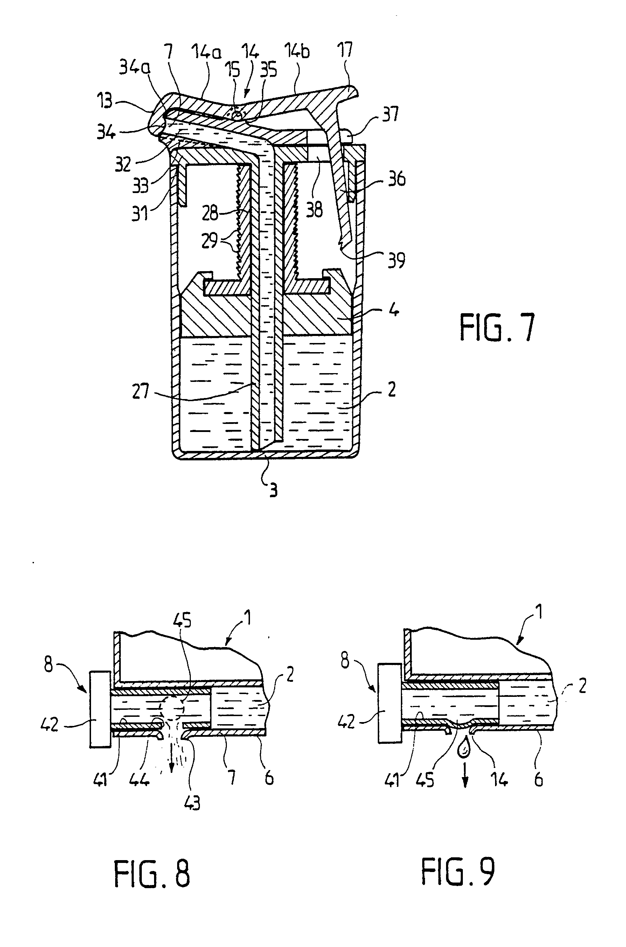

Dans la variante d'exécution du récipient suivant l'invention qui est représentée sur la figure 4, l'orifice de sortie 7 du liquide est prévu à l'extrémité d'un tube 12 partant de la paroi frontale supérieure 3a du récipient 1. L'orifice de sortie 7 est obturé par un volet 13 du dispositif obturateur 8 qui est solidaire d'un bras 14a, d'un levier 14 à deux bras, articulé autour d'un axe horizontal 15 porté par la paroi frontale supérieure 3a du récipient. Le volet de fermeture 13 et le bras 14a sont agencés de manière que, lorsque le bras 14a pivote autour de l'axe 15, le volet 13 effectue un mouvement perpendiculaire à l'axe du tube 12 et de l'orifice de sortie 7. Cet orifice de sortie 7 est prolongé vers le haut par une lèvre 16 solidaire du tube 12 et le long de laquelle glisse le volet obturateur 13. De cette façon, la face interne du volet obturateur 13, qui est en contact avec le liquide se trouvant dans le tube 12 en position de fermeture, glisse en contact avec la lèvre 16 vers sa position d'ouverture et, de ce fait, elle n'est jamais en contact avec l'air, ce qui assure le maintien du liquide 2 à l'état stérile. Le dispositif obturateur 8 est actionné par un bouton de manoeuvre 17 qui est solidaire de l'autre bras 14b du levier 14 qui est opposé au bras 14a. Le bras 14b et le bouton de manoeuvre 17 sont rappelés vers le haut, en position normale de fermeture, par un ressort 18. Le récipient de la figure 4 comprend également un dispositif 19, du type à cliquet et roue à rochet, pour provoquer, lors de chaque pression exercée sur le bouton de manoeuvre 17, une rotation partielle d'une roue 21 sur laquelle est enroulé un fil ou une lanière 22. Ce fil 22 passe à travers un trou étanche prévu dans la paroi frontale supérieure 3a du récipient, il s'étend sensiblement axialement à l'intérieur du récipient 1 et il est accroché, à son extrémité inférieure, au piston 4 se trouvant au départ, c'est-à-dire lorsque le récipient 1 est plein du liquide 2, à proximité du fond inférieur 3 comportant au moins un orifice de mise à l'atmosphère. Par conséquent, lorsque l'utilisateur appuie sur le bouton de manoeuvre 17, il fait pivoter le levier 14 dans le sens des aiguilles d'une montre autour de l'axe horizontal 15. Pendant la course du bouton 17, le volet obturateur 13 se déplace vers le haut le long de la lèvre 16 de manière à ouvrir l'orifice de sortie 7. Des moyens d'étanchéité sont prévus pour empêcher, qu'au cours de ce mouvement, la face interne du volet obturateur 13 vienne en contact avec l'air ambiant. Ces moyens pourront être du type décrit ci-après dans la réalisation illustrée par la figure 7. Par ailleurs le bouton 17 commande le dispositif 19, à cliquet et roue à rochet, pour faire tourner la roue 21 et exercer une traction sur le fil 22 qui tire alors le piston 4 d'une faible distance vers le haut, ce qui assure la sortie de la quantité de liquide désirée tout en maintenant une pression permanente résiduelle dans le produit, empêchant toute contamination. Lorsque l'utilisateur relâche le bouton de manoeuvre 17, le volet obturateur 13 est rappelé en position de fermeture, par le ressort 18, en coupant le jet de liquide avant la dernière goutte, et le dispositif 19, du type à cliquet et roue à rochet, autorise ce mouvement. Avec un récipient de ce type on obtient donc un déplacement du piston 4 vers le haut.

Suivant une variante d'exécution, le volet obturateur 13 comprend une bille qui vient obturer l'orifice de sortie 7 du récipient, lorsque le dispositif obturateur 8 est fermé.

Dans la variante d'exécution représentée sur la figure 5, le bouton de manoeuvre 17, qui est monté mobile sur la paroi frontale supérieure 3a du récipient, agit, directement ou indirectement, sur une membrane déformable élastique 23, reprenant sa position initiale après déformation, logée dans la partie supérieure du récipient 1, en dessous de sa paroi frontale supérieure 3a. Par conséquent, lorsque l'on appuie sur le bouton de manoeuvre 17, on ouvre le dispositif obturateur 8 tout en enfonçant la membrane 23 vers le bas (position représentée en trait mixte), ce qui crée une pression sur le liquide 2 suffisante pour faire sortir ce liquide à travers l'orifice de sortie 7 ouvert. Lorsque l'utilisateur relâche le bouton de manoeuvre 17, celui-ci, en remontant sous l'action d'un ressort de rappel éventuel 18, permet à la membrane 23 de revenir dans sa position initiale, représentée en trait plein sur la figure 5. Ceci provoque alors une dépression dans le récipient 1 et le piston 4 qui se trouve dans la partie inférieure du récipient, est alors attiré vers le haut sur une faible distance, afin de compenser le volume de liquide sorti du récipient tout en maintenant une pression résiduelle permanente dans le produit, évitant toute contamination. Le piston 4 comporte, sur sa partie inférieure, des moyens anti-retour l'empêchant de glisser vers le bas, en particulier lors de la déformation de la membrane 23.

Dans la variante d'exécution représentée sur la figure 6, le piston 4 se trouve au départ dans la partie supérieure du récipient et il est actionné par une tige 24 s'étendant vers le haut à travers un capot supérieur 3b du récipient 1. Cette tige 24, pourvue de crans 25 dirigés vers le bas, est solidaire, à son extrémité supérieure, du bouton de manoeuvre 17 et elle traverse le capot supérieur 3b et le piston 4. Par conséquent lorsque l'utilisateur appuie sur le bouton 17, la tige 24 entraîne, par ses crans 25, le piston 4 vers le fond inférieur 3 pour refouler le liquide à travers l'orifice de sortie 7 tout en créant une pression résiduelle permanente dans le produit empêchant toute contamination. Lorsque la pression sur le bouton de manoeuvre 17 est relâchée, ce bouton, ainsi que la tige 24, remontent sous l'action du ressort de rappel 18. Le piston reste toutefois immobilisé dans sa position précédente, sous l'action de moyen anti-retour constitués, dans ce cas particulier, par une lèvre périphérique de retenue 26 qui est prévue sur la face supérieure du piston 4 et qui est en contact avec la face interne du récipient 1. Cette lèvre de retenue 26 s'oppose à tout déplacement du piston 4 vers le haut.

La figure 7 représente une variante d'exécution du récipient du type dans laquelle le piston 4 est traversé par un tube plongeur vertical 27. Ce tube 27 peut s'étendre suivant l'axe du piston, comme il est représenté sur la figure 7, ou bien encore il peut être décalé latéralement par rapport à cet axe. La partie supérieure de ce tube plongeur 27 sert d'organe de guidage pour une tige 28 solidaire du piston, laquelle présente, sur sa surface latérale externe, des crans ou un filetage 29. La tige 28 est percée axialement et traversée par le tube 27 qui est issu d'un capot supérieur 31. Le tube plongeur 27 est prolongé vers le haut par un conduit 32 vers le haut du récipient. Ce conduit 32 est formé dans un embout 33 porté par le capot 31. L'orifice de sortie 7 qui est constitué par l'extrémité du conduit incliné 32, est obturé par un volet 13 qui présente, en regard de l'orifice 7, un bossage 34 s'engageant dans cet orifice pour le fermer. Le volet obturateur 13 forme une seule pièce avec le bras 14a d'un levier à deux bras 14 qui est articulé autour d'un axe horizontal 15. Cet axe est porté par une saillie 35 solidaire de l'embout 33. L'autre bras 14b du levier 14 forme, à son extrémité, le bouton de manoeuvre 17 et il est prolongé vers le bas par une patte 36,37. Cette patte 36 présente, à son extrémité inférieure, une ou plusieurs dents 39 destinées à agir sur les crans 29 de la tige 28. Par conséquent, lorsque l'utilisateur appuie sur le bouton de manoeuvre 17, il fait basculer le levier 14 dans le sens des aiguilles d'une montre, autour de l'axe 15. Au début de la course de basculement du levier 14, le volet obturateur 13 glisse sur la paroi de manière que le bossage 34 ne soit pas en contact avec l'air et libère l'orifice 7 du conduit 32, si bien que cet orifice est alors ouvert pour permettre la sortie du liquide 2. Au cours de la poursuite du basculement du levier 14, les dents 39 de la patte 36 viennent en contact avec des crans 29 de la tige 28 si bien que la patte 36 se trouve alors accouplée avec cette tige 28. La poursuite de son mouvement vers le bas entraîne par conséquent un léger mouvement de descente de la tige 28 et du piston 4, pour assurer la sortie du liquide et maintenir une pression résiduelle permanente dans le liquide, empêchant toute contamination. Lorsque l'utilisateur cesse d'exercer une pression sur le bouton de manoeuvre 17, le levier 14 revient de lui-même dans la position représentée sur la figure 7, sous l'action de moyens élastiques non représentés, le volet obturateur 13 refermant alors l'orifice de sortie 7 en coupant le jet de liquide avant la dernière goutte et sans que le bossage 34 ait été au contact de l'air, garantissant ainsi une stérilité de versement supplémentaire.

Naturellement le mouvement de coulissement axial du piston 4 à l'intérieur du récipient 1 peut être obtenu par tout dispositif de transmission de mouvement bien connu dans la technique, comportant notamment une roue dentée pouvant être entraînée en rotation à partir de l'extérieur du récipient et accouplée à une tige de piston mobile axialement.

A titre d'exemple dans la forme d'exécution représentée sur les figures 8 et 9, un autre type du dispositif obturateur 8 comprend un manchon 41 solidaire d'un bouton de manoeuvre externe 42 et qui est engagé étroitement dans l'extrémité d'un tube horizontal constituant l'orifice de sortie 7 du récipient 1 alors couché à l'horizontale, le bouton de manoeuvre 42 obturant d'une manière étanche l'orifice 7 du tube 6. Ce tube est percé, à sa partie inférieure, d'un trou 43 pour la sortie du liquide et dans le plan transversal où se trouve ce trou 43, le manchon 41 présente, d'une part, au moins une ouverture 44 et d'autre part au moins un bossage externe 45 frottant élastiquement sur la paroi interne du tube 6. Par conséquent lorsque le manchon 41 est placé dans une position telle que son ouverture 44 soit située en regard du trou 43, comme il représenté sur la figure 8, le dispositif obturateur 8 se trouve ouvert et le liquide peut s'écouler d'une manière continue sous la forme de gouttes ou d'un jet. Pour refermer le récipient, il suffit de faire tourner le manchon 41 (éventuellement par une liaison rigide comme dans les dispositifs précédents) de manière que le bossage 45 vienne se placer en regard du trou 43, comme il est représenté sur la figure 9. Par suite de l'élasticité de la matière constituant le manchon 41, le bossage 45 s'engage alors dans le trou 43 et il provoque l'expulsion de la faible quantité de liquide qui demeure entre la surface externe du manchon 41 et la paroi du trou 43. Le bossage 45 assure également un verrouillage élastique du dispositif obturateur 8 en position de fermeture.

Le récipient aseptique suivant l'invention peut être utilisé pour assurer le mélange, au moment de l'utilisation, de deux liquides contenus séparément, au moment du conditionnement, dans deux compartiments distincts du récipient, ces compartiments pouvant être alors mis en communication par l'intermédiaire de canalisations et d'obturateurs appropriés.

Bien que dans la description qui précède il ait été question de flacon contenant un liquide, il va de soi que toutes les formes d'exécution particulières de l'invention peuvent être également utilisées quelle que soit la nature du produit contenu dans le récipient, c'est-à-dire que les divers flacons peuvent être utilisés avec des produits semi-liquides, pulvérulents ou granuleux s'écoulant d'eux-mêmes sous l'effet de leur propre poids.

**Revendications**

1. Récipient ou flacon aseptique (1) conservateur d'un produit non pâteux, c'est-à-dire liquide, semi-liquide pulvérulent ou granuleux, comportant un corps à paroi latérale cylindrique ou prismatique, obturé, à une extrémité, par un fond (3) et présentant un orifice (7) de sortie du produit, caractérisé en ce qu'il comprend un piston mobile interne (4) frottant d'une manière étanche contre la surface interne de la paroi latérale du récipient (1) et délimitant un volume contenant le produit (2), des moyens pour exercer sur le piston (4), lors de chaque utilisation, une force suffisante pour repousser le piston (4) en direction de l'orifice de sortie (7) et par conséquent pour exercer sur le produit (2) une pression assurant la sortie de la quantité de produit désirée, et des moyens anti-retour pour maintenir le piston, après cessation de la force exercée en vue de la sortie du produit, dans la position atteinte de manière à conserver en permanence une pression résiduelle dans le produit suffisante pour empêcher les germes et bactéries présents dans l'air environnant de pénétrer à l'intérieur du produit et de le contaminer.

2. Récipient suivant la revendication 1, caractérisé en ce que les moyens repoussant le piston mobile (4) en direction de l'orifice de sortie (7) sont constitués par une masse de gaz comprimé remplissant le volume (5) délimité par le piston mobile (4) de l'autre côté du liquide (2).

3. Récipient suivant la revendication 1, caractérisé en ce que les moyens repoussant le piston mobile (4) en direction de l'orifice de sortie (75) comprennent un élément pesant qui est constitué par une masse pesante (9) qui peut être intégrée dans le piston (4) lui-même.

4. Récipient suivant la revendication 1, caractérisé en ce qu'il est ouvert à son extrémité opposée à son fond (3), si bien que le piston interne mobile (4) est directement accessible de l'extérieur pour permettre d'exercer une poussée manuelle sur ce piston (4) en direction de l'orifice de sortie (7), éventuellement au moyen d'une tige (4a).

5. Récipient suivant la revendication 1 caractérisé en ce qu'il comporte un bouton de manoeuvre (17) agissant sur un volet obturateur (13) d'un dispositif obturateur (8) et sur le piston (4), de manière à commander l'ouverture du dispositif obturateur (8) et le déplacement du piston mobile (4) en direction de l'orifice de sortie (7) par une pression exercée sur le bouton de manoeuvre (17), le volet obturateur (13) est solidaire d'un bras (14a) d'un levier à deux bras (14), articulé autour d'un axe horizontal (15) porté par une paroi frontale supérieure (3a) du récipient (1), le bouton de manoeuvre (17) est solidaire d'un second bras (14b) du levier (14), opposé au premier bras (14a), et le levier à deux bras (14) et le bouton de manoeuvre (17) sont rappelés en position normale de fermeture par un ressort (18), volet obturateur (13) coupant le jeu de sortie du liquide avant la dernière goutte, évitant ainsi tout contact du liquide avec l'air et assurant donc une garantie de stérilité de versement supplémentaire.

6. Récipient suivant la revendication 5 caractérisé en ce que le piston mobile (4) est solidaire d'une tige (28) s'étendant vers le haut, cette tige de piston (28) présentant, sur sa surface latérale externe, une succession de crans (29) dirigés vers le haut ou un filetage, et le bouton de manoeuvre (17) qui est monté mobile sur un capot supérieur (31) du récipient, comporte au moins un élément élastique (36) qui, lorsque le bouton (17) est enfoncé, prend appui sur des crans (29) de la tige (28) afin de provoquer un déplacement de cette tige du piston (4) en direction du fond inférieur (3) du récipient.

7. Récipient suivant la revendication 6 caractérisé en ce que le piston (4) est traversé par un tube plongeur vertical (27), la partie supérieure de ce tube plongeur (27) sert d'organe de guidage pour la tige (28) qui est percée axialement et traversée par le tube (27), ce tube (27) est solidaire du capot supérieur (31) et il est prolongé vers le haut par un conduit (32) formé dans un embout (33) porté par le capot supérieur (31), dont l'extrémité constitue l'orifice de sortie (7), lequel est obturé par le volet (13) qui présente, en regard de l'orifice (7), un léger bossage (34) s'engageant dans cet orifice pour le fermer, et la paroi interne du volet (13) frotte sur la paroi externe de l'embout (33), au moment de l'ouverture, de manière à être en permanence protégée de l'air, le volet obturateur (13) forme une seule pièce avec le bras (14a) du levier à deux bras (14) articulé autour de l' axe horizontal (15) qui est porté par l'embout (33), l'autre bras (14b) du levier (14) forme, à son extrémité, le bouton de manoeuvre (17) et il est prolongé vers le bas par une patte (36) qui traverse le capot (31), cette patte (36) présentant, à son extrémité inférieure, une ou plusieurs dents (39) destinées à agir sur les crans (29) de la tige (28).

8. Récipient suivant la revendication 5 caractérisé en ce qu'il comporte un piston (4) se trouvant initialement dans la partie supérieure du récipient, une tige (24), pourvue de crans dirigés vers le bas, solidaire du bouton de manoeuvre (17) et traversant un capot supérieur (3b) du récipient et le piston (4), un ressort de rappel (18) sollicitant le bouton de manoeuvre (17) et la tige (24) vers le haut et une lèvre périphérique de retenue (26) prévue sur la face supérieure du piston (4), en contact avec la face interne du récipient (1) pour s'opposer à tout déplacement du piston vers le haut.

9. Récipient suivant la revendication 1, caractérisé en ce qu'il comprend un piston mobile (4), logé dans la partie inférieure du récipient, un bouton de manoeuvre (17) est monté mobile sur la paroi frontale supérieure (3a) du récipient et ce bouton de manoeuvre (17) est accouplé à une membrane déformable élastique (23) qui est logée dans la partie supérieure du récipient (1), en-dessous de sa paroi frontale supérieure (3a).

10. Récipient suivant l'une quelconque des revendications 1 à 4, caractérisé en ce que le dispositif obturateur (8) comprend un manchon (41) solidaire d'un bouton de manoeuvre externe (42) qui peut être commandé par un bouton poussoir commandant le déplacement du piston 4, et qui est engagé étroitement dans un tube (7) constituant l'orifice de sortie du récipient (1), le bouton de manoeuvre (42) obturant d'une manière étanche l'extrémité du tube (7), le tube constituant l'orifice de sortie (7) est percé, dans sa paroi latérale, d'un trou (43) pour la sortie du liquide et dans le plan transversal où se trouve ce trou (43) le manchon (41) présente, d'une part, au moins une ouverture (44) et, d'autre part, au moins un bossage externe (45) frottant élastiquement sur la paroi interne du tube (7) et pouvant venir s'engager dans le trou (43).

FIG.1

FIG.2

FIG.3

FIG.4

FIG.5

FIG.6

FIG. 7

FIG. 8

FIG. 9